# EUROPEAN PATENT APPLICATION

(11) **EP 4 667 209 A1**
(43) Date of publication of application: **24.12.2025**
(21) Application number: 25183655.7
(22) Date of filing: 18.06.2025
(51) Int. Cl.: B32B 1/00, B32B 27/08, B32B 27/30, B32B 27/32, B32B 27/34

(54) **MULTILAYERED CONTAINERS**

(30) Priority: 21.06.2024 US 202463662477 P; 05.05.2025 US 202519199344
(71) Applicant: Richard-Allan Scientific, LLC, Kalamazoo Michigan 49008 (US)
(72) Inventor: VERHULST, Kevin, Kalamazoo (US); BROWN, Robert, Kalamazoo (US)
(74) Representative: Finlayson, Scott Henry

(57) **Abstract**

Multilayered containers and methods of forming multilayered containers are described. The multilayered containers comprise one or more walls defining a storage region for containing one or more substances therein. Each wall of the multilayered containers comprises a plurality of layers, wherein each layer provides at least one of a barrier for containing one or more substances within the storage region or structural integrity to the multilayered containers. The manufacturing of the multilayered containers does not form per- and polyfluoroalkyl substances.

## Description

### CROSS-REFERENCE TO RELATED APPLICATIONS

This patent application claims priority benefit, with regard to all common subject matter, of U.S. Provisional Patent Application No. 63/662,477, filed June 21, 2024, and entitled "MULTILAYERED CONTAINERS." The above-referenced application is hereby incorporated by reference in its entirety into the present application.

### BACKGROUND

### 1. Field

Embodiments of the present disclosure generally relate to chemical storage containers. More specifically, embodiments of the present disclosure relate to multilayered chemical storage containers.

### 2. Related Art

Previous techniques for forming chemical storage containers involve the fluorination of polyethylene, such as high-density polyethylene (HDPE). By fluorinating polyethylene containers, the containers have a reduced permeation of solvents through the walls of the containers. However, per- and polyfluoroalkyl substances (PFAS), a dangerous category of chemicals, are created in the production of fluorinated polyethylene containers. PFAS can pose a threat to the environment and to the health of human beings. Accordingly, current chemical storage containers lack environmentally safe components capable of containing a wide range of chemicals.

### SUMMARY

Embodiments of the present disclosure solve the above-mentioned problems by providing a multilayered container that does not create per- and polyfluoroalkyl substances (PFAS) during the manufacturing of the multilayered container. Embodiments of the present disclosure include a multilayered container that does not comprise fluorinated polyethylene such that the manufacturing of the multilayered container does not create PFAS. Further, embodiments of the present disclosure include the multilayered container comprising a plurality of layers configured to provide one or more barriers that prevent or reduce the permeation of one or more substances through the multilayered container. Embodiments of the present disclosure include one or more walls of the multilayered container comprising three or more layers, wherein each layer comprises a material configured to prevent or reduce one or more substances from permeating though the walls of the multilayered container. Embodiments of the present disclosure also provide methods for manufacturing the multilayered container as described herein.

In some embodiments, the techniques described herein relate to a multilayered container including: a storage region configured to contain one or more substances; and one or more walls defining the storage region, each wall including: a first layer configured to provide a liquid barrier to the storage region, wherein the first layer includes a high-density polyethylene material; a second layer configured to provide a gaseous barrier to the storage region, wherein the second layer includes an ethyl vinyl alcohol material; and a third layer configured to provide rigidity to the one or more walls, wherein the first layer is an innermost layer of each wall, the third layer is an outermost layer of each wall, and the second layer is between the first layer and the third layer, wherein the one or more walls do not include a fluorinated polyethylene material.

In some embodiments, the techniques described herein relate to a multilayered container, wherein each wall further includes a fourth layer including a nylon material, wherein the fourth layer is between the first layer and the third layer.

In some embodiments, the techniques described herein relate to a multilayered container, wherein the first layer constitutes 5% to 60% of a thickness of each wall, wherein the second layer constitutes 5% to 50% of the thickness of each wall, and wherein the third layer constitutes 5% to 50% of the thickness of each wall.

In some embodiments, the techniques described herein relate to a multilayered container, wherein each wall further includes: a fourth layer between the first layer and the third layer, wherein the fourth layer constitutes 5% to 30% of the thickness of the multilayered container.

In some embodiments, the techniques described herein relate to a multilayered container, wherein the fourth layer does not include an adhesive material.

In some embodiments, the techniques described herein relate to a multilayered container, wherein the third layer includes at least one of a high-density polyethylene material or a low-density polyethylene material.

In some embodiments, the techniques described herein relate to a multilayered container, wherein the first layer and the third layer prevent degradation of the second layer.

In some embodiments, the techniques described herein relate to a multilayered container, wherein the one or more substances comprise at least one of a polar solvent or a non-polar solvent.

In some embodiments, the techniques described herein relate to a multilayered container including: a storage region configured to contain one or more substances; and one or more walls defining the storage region, each wall including: a first layer configured to provide a liquid barrier to the storage region; a second layer configured to provide a gaseous barrier to the storage region; and a third layer configured to provide rigidity to the one or more walls, wherein the first layer is an innermost layer of each wall, the third layer is an outermost layer of each wall, and the second layer is between the first layer and the third layer, wherein the one or more walls do not include a fluorinated polyethylene material.

In some embodiments, the techniques described herein relate to a multilayered container, wherein the first layer constitutes 5% to 60% of a thickness of the multilayered container, wherein the second layer constitutes 5% to 50% of the thickness of the multilayered container, and wherein the third layer constitutes 5% to 50% of the thickness of the multilayered container.

In some embodiments, the techniques described herein relate to a multilayered container, further including: a fourth layer between the first layer and the third layer, wherein the fourth layer constitutes 5% to 30% of the thickness of the multilayered container.

In some embodiments, the techniques described herein relate to a multilayered container, wherein the thickness of the multilayered container is up to 10 millimeters.

In some embodiments, the techniques described herein relate to a multilayered container, wherein the first layer and the third layer include a polyethylene material.

In some embodiments, the techniques described herein relate to a multilayered container, wherein the storage region has a volume within a range of 1 liter to 5.5 liters.

In some embodiments, the techniques described herein relate to a multilayered container, wherein the one or more substances include one or more pathology reagents.

In some embodiments, the techniques described herein relate to a multilayered container, wherein the one or more pathology reagents include at least one of aldehydes, hematoxylin, alcohols, xylenes, or oxidizing agents.

In some embodiments, the techniques described herein relate to a method for forming a multilayered container, the method including: extruding a multilayered parison including: a first layer including a high-density polyethylene material; a second layer including an ethyl vinyl alcohol material; and a third layer including a high-density or low-density polyethylene material, wherein the first layer is an innermost layer of the multilayered parison, the third layer is an outermost layer of the multilayered parison, and the second layer is between the first layer and the third layer, wherein the multilayered parison does not include a fluorinated polyethylene material; enclosing at least a portion of the multilayered parison with a mold having a shape; blowing air into the multilayered parison such that the multilayered parison forms to the shape of the mold to form the multilayered container; and removing the multilayered container from the mold.

In some embodiments, the techniques described herein relate to a method, further including removing an excess material from the multilayered container.

In some embodiments, the techniques described herein relate to a method, wherein removing the excess material forms a handle of the multilayered container.

In some embodiments, the techniques described herein relate to a method, wherein the multilayered parison further includes a fourth layer.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the present disclosure will be apparent from the following detailed description of the embodiments and the accompanying drawing figures.

### BRIEF DESCRIPTION OF THE DRAWINGS

Embodiments of the present disclosure are described in detail below with reference to the attached drawing figures, wherein:
FIG. 1A depicts an exemplary multilayered container according to some embodiments;
FIG. 1B depicts an exemplary multilayered container according to some embodiments;
FIG. 1C depicts an exemplary multilayered container according to some embodiments;
FIG. 2A depicts an exemplary wall of a multilayered container according to some embodiments;
FIG. 2B depicts an exemplary wall of a multilayered container according to some embodiments; and
FIG. 3 depicts an exemplary method for molding a multilayered container according to some embodiments.

The drawing figures do not limit the present disclosure to the specific embodiments disclosed and described herein. The drawings are not necessarily to scale, emphasis instead being placed upon clearly illustrating the principles of the present disclosure.

### DETAILED DESCRIPTION

The following detailed description of embodiments of the present disclosure references the accompanying drawings that illustrate specific embodiments in which the present disclosure can be practiced. The embodiments are intended to describe aspects of the present disclosure in sufficient detail to enable those skilled in the art to practice the present disclosure. Other embodiments can be utilized, and changes can be made without departing from the scope of the present disclosure. Therefore, the following detailed description is not to be taken in a limiting sense. The scope of embodiments of the present disclosure is defined only by the appended claims, along with the full scope of equivalents to which such claims are entitled.

In this description, references to "one embodiment," "an embodiment," or "embodiments" mean that the feature or features being referred to are included in at least one embodiment of the technology. Separate reference to "one embodiment," "an embodiment," or "embodiments" in this description do not necessarily refer to the same embodiment and are also not mutually exclusive unless so stated and/or except as will be readily apparent to those skilled in the art from the description. For example, a feature, structure, or act described in one embodiment may also be included in other embodiments but is not necessarily included. Thus, the technology can include a variety of combinations and/or integrations of the embodiments described herein.

There exists a need for containers capable of containing a wide range of chemicals that do not create per- and polyfluoroalkyl substances (PFAS) during the manufacturing of such containers. Embodiments of the disclosure include a multilayered container that does not comprise fluorinated polyethylene such that the manufacturing of the multilayered container does not create PFAS. Further, embodiments of the disclosure include the multilayered container comprising a plurality of layers configured to provide one or more barriers that prevent or reduce the permeation of one or more substances through the multilayered container, thereby containing the one or more substances. Embodiments of the disclosure include one or more walls of the multilayered container comprising three or more layers, wherein each layer comprises a material configured to prevent or reduce one or more substances from permeating through the walls of the multilayered container.

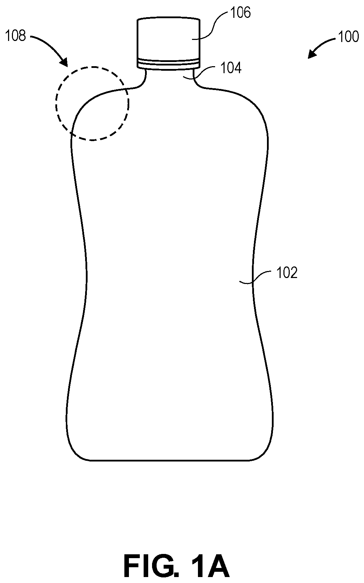

FIGS. 1A-1C depict exemplary embodiments of multilayered container 100. Multilayered container 100 may comprise a storage region 102, a neck 104, a lid 106, one or more walls 108, and a handle 110. In some embodiments, multilayered container 100 comprises a plurality of layers. For example, one or more walls 108 of multilayered container 100 may comprise a plurality of layers such as a first layer 112, a second layer 114, a third layer 116, and a fourth layer 118 described in more detail below. In some embodiments, one or more walls 108 of multilayered container 100 may comprise three or more layers, four or more layers, or three to seven layers.

One or more walls 108 may define the boundaries of storage region 102. Further, one or more walls 108 may define a volume of multilayered container 100 and/or a volume of storage region 102. For example, one or more walls 108 may encompass a volume of 5 liters (L) thereby defining a storage region 102 with a volume of 5 L. In some embodiments, multilayered container 100 and/or storage region 102 may have a volume of less than 0.5 L, less than 1 L, less than 2 L, less than 5 L, less than 10 L, less than 25 L, or greater than 25 L. In some embodiments, the volume of multilayered container 100 and/or storage region 102 may be within a range of 1 L to 5.5 L, a range of 5 L to 10 L, a range of 10 L to 25 L, a range of 25 L to 50 L, or greater than 50 L. For example, storage region 102 may have a volume of 5 L.

Embodiments are contemplated in which one or more walls 108 of multilayered container 100 may comprise three or more layers, four or more layers, five or more layers, or three to seven layers. For example, one or more walls 108 of multilayered container 100 may comprise first layer 112, second layer 114, third layer 116, and/or fourth layer 118, as further described below. In some embodiments, the thickness of wall 108 may be up to 20 millimeters (mm), up to 17.5 mm, up to 15 mm, up to 12.5 mm, up to 10 mm, up to 7.5 mm, or up to 5 mm. For example, the thickness of wall 108 may be within a range of 0.5 mm to 5 mm, such as 4 mm. Embodiments are contemplated in which the thickness is greater than 20 mm. In some embodiments, the thickness of wall 108 may depend at least in part on the volume of storage region 102. For example, the thickness of wall 108 may increase as the volume of storage region 102 increases.

In some embodiments, neck 104 may comprise threads to facilitate the closure and/or opening of multilayered container 100 via lid 106. For example, neck 104 may comprise threads that mate with threads disposed on lid 106 to thereby restrict access to the contents contained in multilayered container 100 when closed. Further, the threads on lid 106 may be unscrewed or otherwise demated from the threads on neck 104 to open multilayered container 100 and access the contents of multilayered container 100. Embodiments are contemplated in which the threads of neck 104 may be utilized to attach or otherwise secure valves, faucets, spigots, or other devices configured to control the flow of the contents of multilayered container 100. Embodiments are contemplated in which lid 106 fits on neck 104 via a snap-fit connection or other suitable connection.

Embodiments are contemplated in which multilayered container 100 comprises a plurality of storage regions 102, a plurality of necks 104, a plurality of lids 106, a plurality of walls 108, and/or a plurality of handles 110. For example, multilayered container 100 may comprise a plurality of handles 110 including a first handle on a first side and a second handle on a second side. In another example, multilayered container 100 may comprise a plurality of necks 104 such that the contents of multilayered container 100 may be controllably expelled and/or flowed from each neck 104.

FIG. 1A depicts an exemplary embodiment of multilayered container 100 according to some embodiments. In some embodiments, multilayered container 100 may not include handle 110. For example, as depicted in FIG. 1A, multilayered container 100 may not comprise handle 110. The volume of multilayered container 100 and/or storage region 102 may be small enough (e.g., less than 2 L) that a user may lift multilayered container 100 via one or more walls 108. Further, the shape of multilayered container 100 and/or storage region 102 may be configured to allow a user to hold multilayered container 100 via one or more walls 108. For example, multilayered container 100 and/or storage region 102 may include an hourglass-like shape such that the shape facilitates a user's ability to hold multilayered container 100 via walls 108. Further, the shape of storage region 102 and/or one or more walls 108 may include one or more curved surfaces to facilitate a user's ability to hold multilayered container 100 via walls 108. Additionally, or alternatively, the shape of storage region 102 and/or one or more walls 108 may include one or more ridges or grooves to facilitate a user's ability to hold multilayered container 100 via one or more walls 108.

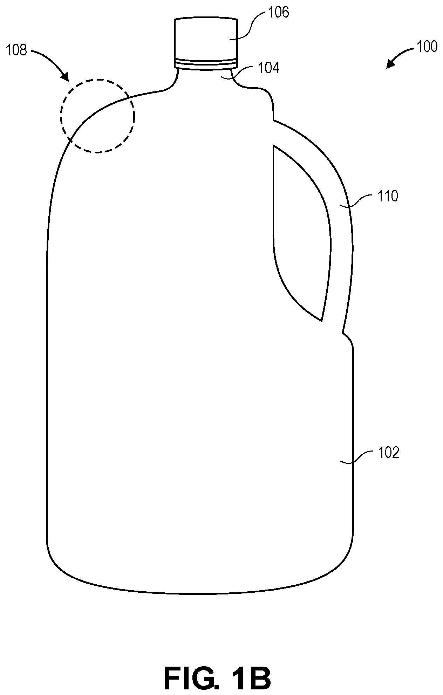

FIG. 1B depicts an exemplary embodiment of multilayered container 100 according to some embodiments. Multilayered container 100 and/or storage region 102 may be cylindrical in shape. In some embodiments, handle 110 may be attached to a side of storage region 102. For example, handle 110 may be disposed proximate an upper and/or distal portion of storage region 102. In some embodiments, the location of handle 110 may facilitate the accessibility of the contents of multilayered container 100. For example, handle 110 being disposed proximate an upper portion of storage region 102 may facilitate the rotation of multilayered container 100 while open such that the contents of multilayered container 100 may be more easily expelled and/or flowed. In some embodiments, handle 110 may be formed simultaneously with multilayered container 100. Alternatively, or additionally, handle 110 may be attached to storage region 102 after forming multilayered container 100.

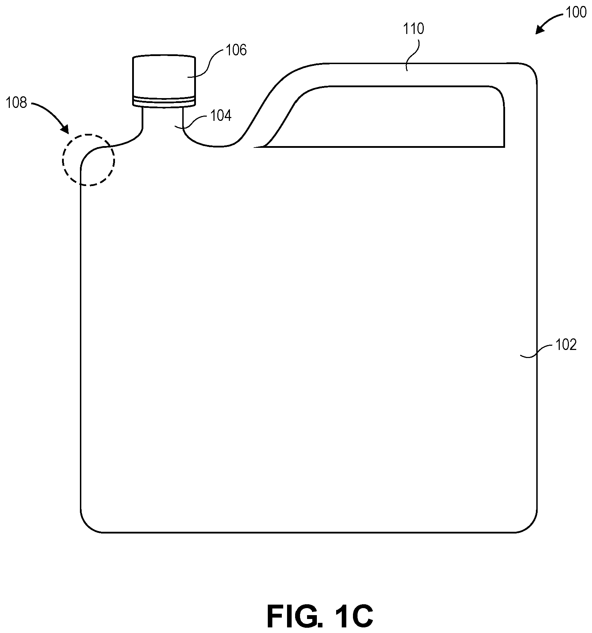

FIG. 1C depicts an exemplary embodiment of multilayered container 100 according to some embodiments. Multilayered container 100 and/or storage region 102 may be a rectangular prism in shape. In some embodiments, handle 110 may be disposed on the same side as neck 104 and lid 106. In some embodiments, handle 110 may be disposed above the center of mass of multilayered container 100 to facilitate the carrying of multilayered container 100. For example, handle 110 may be disposed proximate an upper portion of storage region 102 such that the center of mass of multilayered container 100 is positioned below at least a portion of handle 110.

Embodiments are contemplated in which neck 104 may be on any location of multilayered container 100. For example, neck 104 may be disposed proximate the bottom of multilayered container 100 and/or storage region 102. Further, neck 104 may be proximate a bottom portion of multilayered container 100 and connected to a valve, faucet, spigot, or other controllable passage or outlet such that a user can control the release and/or flow of the contents from multilayered container 100. For example, neck 104 may be disposed proximate the bottom of storage region 102 and comprise threads configured to mate to a valve such that a user may control the flow of the contents from storage region 102 via the valve.

Embodiments are contemplated in which multilayered container 100 may not comprise a neck 104 and/or a lid 106. For example, multilayered container 100 may not comprise neck 104 and lid 106 such that multilayered container 100 may comprise at least one opening to storage region 102. Further, for example, an upper portion of multilayered container 100 may be open such that the contents of multilayered container 100 are accessible without opening or detaching lid 106.

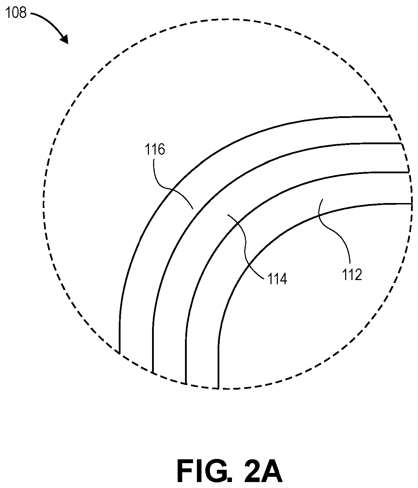

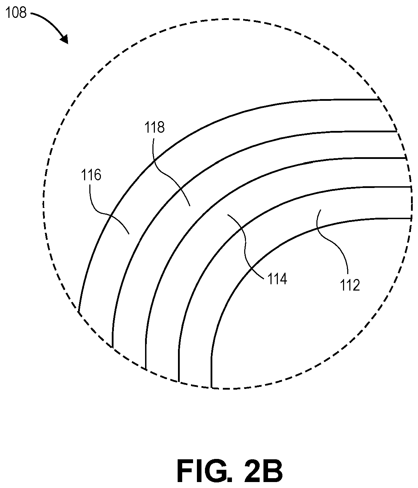

FIGS. 2A-2B depict exemplary embodiments of at least one wall 108 of multilayered container 100. FIG. 2A depicts an embodiment of wall 108 comprising a first layer 112, a second layer 114, and a third layer 116. FIG. 2B depicts an embodiment of wall 108 comprising a first layer 112, a second layer 114, a third layer 116, and a fourth layer 118. In some embodiments, multilayered container 100 comprises one or more walls 108 defining a storage region 102, wherein each wall 108 of multilayered container 100 comprises three or more layers, four or more layers (e.g. layers 112, 114, 116, and/or 118), five or more layers, or three to seven layers. For example, each wall 108 may comprise a first layer 112, a second layer 114, and a third layer 116. In some embodiments, one or more walls 108 may comprise one or more adhesive layers configured to facilitate the adhesion of two or more layers. Alternatively, one or more walls 108 of multilayered container 100 may not comprise an adhesive material.

First layer 112 may be an innermost layer of wall 108. In some embodiments, first layer 112 may be utilized to prevent or reduce liquid permeation from multilayered container 100. For example, first layer 112 may be utilized to prevent or reduce the liquid permeation of solvents from storage region 102 of multilayered container 100. Additionally, or alternatively, first layer 112 may be utilized to prevent or reduce the permeation of polar molecules from multilayered container 100. For example, first layer 112 may prevent or reduce the permeation of polar solvents, such as water and/or acetone, from storage region 102 of multilayered container 100.

First layer 112 may provide a liquid barrier such that a liquid or aqueous material contained within multilayered container 100 does not permeate through wall 108. First layer 112 may be configured to provide a liquid barrier to storage region 102 of multilayered container 100. For example, first layer 112 may be configured to prevent or reduce the permeation of liquids, such as polar solvents, through one or more walls 108 of multilayered container 100. First layer 112 may further provide at least one of rigidity or flexibility to one or more walls 108 of multilayered container 100. For example, first layer 112 may comprise a rigid material, such as high-density polyethylene (HDPE), or flexible material, such as low-density polyethylene (LDPE), such that first layer 112 provides rigidity and/or flexibility to multilayered container 100.

In some embodiments, the first layer 112 may comprise a polyethylene material such as a HDPE material, a medium-density polyethylene (MDPE) material, or a LDPE material. As used herein, a HDPE material may have a density greater than 0.940 grams per cubic centimeter (g/cm³), such as a density of 0.970 g/cm³, a MDPE material may have a density within a range of 0.926 g/cm³ to 0.940 g/cm³, such as a density of 0.930 g/cm³, and a LDPE material may have a density less than 0.940 g/cm³ such as a density of 0.880 g/cm³, 0.910 g/cm³, or 0.925 g/cm³. Embodiments are contemplated in which first layer 112 does not comprise fluorinated polyethylene (e.g., fluorinated HDPE) such that the formation of first layer 112 of multilayered container 100 does not form PFAS. Embodiments are contemplated in which first layer 112 may comprise a polymer material or a resin material.

Second layer 114 may be an intermediate layer of wall 108. In some embodiments, second layer 114 may be utilized to prevent or reduce the permeation of gases and/or vapors from multilayered container 100. For example, second layer 114 may be utilized to prevent or reduce the permeation of benzene, toluene, ethylbenzene, and/or xylene from storage region 102 of multilayered container 100. Additionally, or alternatively, second layer 114 may be utilized to prevent or reduce the permeation of non-polar molecules, such as acetic acid, chloroform, and ethyl acetate, from multilayered container 100. Second layer 114 may provide a gaseous barrier such that gases and/or vapors produced by the off-gassing of the contents within multilayered container 100 do not permeate through wall 108. For example, second layer 114 may prevent or reduce the off-gassing from xylene from permeating out of storage region 102 of multilayered container 100.

Second layer 114 may comprise an ethyl vinyl alcohol (EVOH) material, a nylon material, or other suitable material. For example, second layer 114 may comprise an EVOH material, where the EVOH material provides a gaseous barrier and/or prevents the permeation of non-polar molecules. Further, the molar concentration of EVOH in second layer 114 may range from 27% to 48%. For example, the molar concentration of EVOH in second layer 114 may be 35%. In another example, second layer 114 may comprise a nylon material, where the nylon material provides a gaseous barrier and/or prevents permeation of non-polar molecules.

Third layer 116 may be the outermost layer of multilayered container 100. In some embodiments, third layer 116 may be configured to provide at least one of rigidity or flexibility to one or more walls 108 of multilayered container 100. For example, third layer 116 may comprise a rigid material, such as high-density polyethylene (HDPE), such that third layer 116 provides rigidity to one or more walls 108. Third layer 116 may further provide a liquid barrier such that a liquid or aqueous material contained within multilayered container 100 does not permeate through wall 108. For example, third layer 116 may provide a liquid barrier such that a liquid would not permeate into and/or out of storage region 102 of multilayered container 100. Additionally, or alternatively, third layer 116 may prevent or reduce the permeation of polar molecules into and/or out of multilayered container 100. For example, third layer 116 may prevent or reduce polar molecules from permeating walls 108 that would otherwise permeate and degrade second layer 114. For example, third layer 116 may prevent or reduce water from permeating through one or more walls 108 and into storage region 102.

In some embodiments, third layer 116 may comprise a rigid material (e.g., HDPE) to provide a rigidity to multilayered container 100. Alternatively, or additionally, third layer 116 may comprise a pliable material (e.g., low-density polyethylene (LDPE)) that is able to flex and/or deform when a force is applied to the multilayered container 100. In some embodiments, the third layer 116 may comprise a polyethylene material such as a HDPE material, a medium-density polyethylene (MDPE), or a LDPE material. Embodiments are contemplated in which third layer 116 does not comprise fluorinated polyethylene (e.g., fluorinated HDPE) such that the formation of multilayered container 100 does not form PFAS.

Fourth layer 118 may be an intermediate layer of wall 108. As depicted in FIG. 2B, fourth layer 118 may be between first layer 112 and third layer 116 and/or between second layer 114 and third layer 116. In some embodiments, fourth layer 118 may be utilized to prevent or reduce gaseous permeation from the multilayered container 100. For example, fourth layer 118 may be utilized to prevent or reduce the permeation of gases and/or vapors produced from the off-gassing of xylene from storage region 102 of multilayered container 100. Additionally, or alternatively, fourth layer 118 may be utilized to prevent or reduce the permeation of non-polar chemicals, such as acetic acid, chloroform, and ethyl acetate, from multilayered container 100. Fourth layer 118 may provide a barrier to gases, vapors, and/or non-polar chemicals in cooperation with second layer 114 such that a gas, vapor, and/or non-polar chemical contained within multilayered container 100 does not permeate through wall 108. In some embodiments, fourth layer 118 may comprise an EVOH material or a nylon material. For example, fourth layer 118 may comprise a nylon material to provide a gaseous barrier.

In some embodiments, fourth layer 118 may facilitate the adhesion of the above-described layers. Further, fourth layer 118 may be an adhesive layer configured to facilitate adhesion of one or more layers (e.g., layers 112, 114, and/or 116). For example, fourth layer 118 may comprise an adhesive resin such that fourth layer 118 facilitates the adhesion between layers of one or more walls 108 (e.g., the adhesion between second layer 114 and third layer 116). Embodiments are contemplated in which fourth layer 118 may comprise a resin adhesive material, an epoxy adhesive material, or any other suitable adhesive material capable of facilitating the adhesion between the layers. Alternatively, in some embodiments, fourth layer 118 does not comprise an adhesive material.

In some embodiments, each wall 108 comprises one or more adhesive layers between the above-described layers to facilitate adhesion of the layers (e.g., layers 112, 114, 116, and/or 118) of wall 108. For example, an adhesive layer may be between first layer 112 and second layer 114, second layer 114 and fourth layer 118, and/or fourth layer 118 and third layer 116. In another example, an adhesive layer may be between first layer 112 and second layer 114 and/or between second layer 114 and third layer 116. In some embodiments, one or more adhesive layers may constitute up to 30%, up to 20%, up to 15%, up to 10%, 5% to 30%, 5% to 20%, 5% to 15%, or 5% to 10% of the thickness of wall 108. Embodiments are contemplated in which wall 108 does not comprise an adhesive layer. For example, each layer (e.g., layers 112, 114, 116, 118) of wall 108 may not comprise an adhesive material.

In some embodiments, one or more walls 108 do not comprise a fluorinated polyethylene material (e.g., a fluorinated HDPE material). Each layer (e.g., layers 112, 114, 116, 118) of wall 108 may not comprise fluorinated polyethylene (e.g., fluorinated HDPE) such that the formation of multilayered container 100 does not create per- and polyfluoroalkyl substances (PFAS). More specifically, first layer 112 and/or third layer 116 may not comprise fluorinated polyethylene (e.g., fluorinated HDPE) such that PFAS are not formed by manufacturing first layer 112 and third layer 116 of multilayered container 100. As described above, a multilayered container 100 comprising one or more walls 108 that do not comprise a fluorinated polyethylene material does not form PFAS during the manufacturing of the multilayered container 100. Further, as described above, PFAS are a dangerous category of chemicals that can pose a threat to the environment and to the health of human beings. Therefore, a multilayered container 100 comprising one or more walls 108 that do not comprise a fluorinated polyethylene material is environmentally safer than a container comprising fluorinated polyethylene.

In some embodiments, the above-described layers may be ordered such that multilayered container 100 is configured to contain one or more chemicals and/or substances. Further, the ordered layering of layers 112, 114, 116, and/or 118 may be configured to contain one or more substances, such as polar and/or non-polar chemicals, within storage region 102 of multilayered container 100. For example, the ordered layering of a first layer 112, a second layer 114, and a third layer 116 may be configured to contain polar solvents such as acetone, methanol, and water and/or non-polar solvents such as acetic acid, chloroform, and ethyl acetate within storage region 102 of multilayered container 100.

Multilayered container 100 may be configured to contain polar and/or non-polar chemicals. For example, multilayered container 100 may be configured to hold polar solvents such as acetone, methanol, and water and/or non-polar solvents such as acetic acid, chloroform, and ethyl acetate. In some embodiments, multilayered container 100 may be configured to contain pathology reagents, such as aldehydes, hematoxylin, alcohols, xylenes, and/or oxidizing agents. In some embodiments, multilayered container 100 may be configured to hold organic compounds such as alcohols and/or aromatic compounds. In some embodiments, multilayered container 100 may be configured to contain at least one of benzene, toluene, ethylbenzene, xylene, acetone, isopropyl alcohol, ethyl alcohol, toluene, methyl alcohol, chloroform, water, reagent grade alcohol, or formaldehyde.

The thickness of the layers (e.g., layers 112, 114, 116, 118) of each wall 108 may be varied to achieve a desired containment of one or more chemicals. In some embodiments, first layer 112 may constitute up to 90%, up to 80%, up to 75%, 15% to 65%, 20% to 60%, 25% to 50%, or 30% to 40% of the thickness of each wall 108. In some embodiments, first layer 112 may constitute 5% to 90%, 5% to 80%, 5% to 70%, 5% to 60%, 5% to 50%, 5% to 40%, 5% to 30%, or 5% to 20% of the thickness of each wall 108. Second layer 114 may constitute up to 90%, up to 80%, up to 75%, up to 60%, 20% to 40%, or 25% to 30% of the thickness of each wall 108. In some embodiments, second layer 114 may constitute 5% to 90%, 5% to 80%, 5% to 70%, 5% to 60%, 5% to 50%, 5% to 40%, 5% to 30%, or 5% to 20% of the thickness of each wall 108.

Third layer 116 may constitute up to 75%, up to 60%, 20% to 40%, or 25% to 30% of the thickness of each wall 108. In some embodiments, third layer 116 may constitute 5% to 90%, 5% to 80%, 5% to 70%, 5% to 60%, 5% to 50%, 5% to 40%, 5% to 30%, or 5% to 20% of the thickness of each wall 108. Fourth layer 118 may constitute up to 30%, up to 20%, 10% to 20%, or approximately 15% of the thickness of each wall 108. In some embodiments, fourth layer 118 may constitute 5% to 50%, 5% to 40%, 5% to 30%, 5% to 25%, 5% to 20%, 5% to 15%, or 5% to 10% of the thickness of each wall 108. In some embodiments, the thickness of wall 108 may be up to 20 millimeters (mm), up to 17.5 mm, up to 15 mm, up to 12.5 mm, up to 10 mm, up to 7.5 mm, or up to 5 mm. For example, the thickness of wall 108 may be within a range of 0.5 mm to 5 mm, such as 4 mm. Embodiments are contemplated in which the thickness is greater than 20 mm. In some embodiments, the thickness of wall 108 may depend at least in part on the volume of storage region 102. For example, the thickness of wall 108 may increase as the volume of storage region 102 increases.

In some embodiments, the thickness of each layer may affect the effectiveness of the multilayered container 100 to contain a liquid and/or gaseous material. For example, increasing the thickness of first layer 112 may increase the effectiveness of containing liquids and/or polar chemicals within multilayered container 100. In another example, increasing the thickness of second layer 114 may increase the effectiveness of containing gases, vapors, and/or non-polar chemicals within multilayered container 100. The thickness of each layer may be selected to have a specific capability for containing gas and/or liquid materials. For example, second layer 114 may be within a range of 1 mm to 2 mm such that multilayered container 100 is able to prevent or reduce the permeation of xylene through one or more walls 108.

In some embodiments, the order of the above-described layers may be configured to reduce or prevent degradation of multilayered container 100. For example, an EVOH layer (e.g., second layer 114) may be between two layers (e.g., first layer 112 and third layer 116) that prevent the degradation of the EVOH layer. Further, for example, an EVOH layer may be disposed between two layers comprising a HDPE material that prevents polar molecules from permeating therethrough and degrading the EVOH layer. In another example, a nylon layer (e.g., second layer 114 or fourth layer 118) may be adjacent to one or more layers (e.g., first layer 112 and/or third layer 116) to increase the structural integrity of the nylon layer. In some embodiments, multilayered container 100 may be configured to meet shipping regulation requirements, such as a drop test, a leakproofness test, a pressure test, a stack test, a burst test, and/or a puncture test. For example, multilayered containers 100 may be durable enough to withstand a drop test, a pressure test, and a stack test.

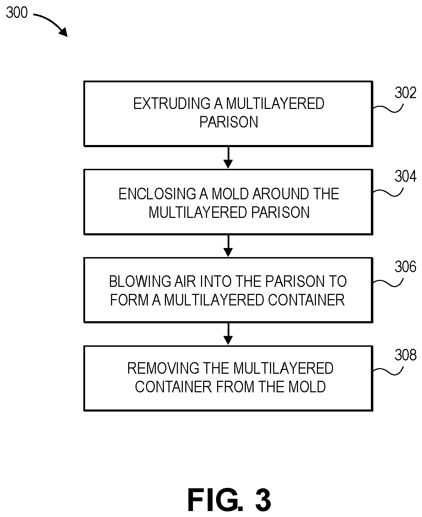

FIG. 3 depicts an exemplary method 300 for forming a multilayered container, such as multilayered container 100. At step 302, a multilayered parison may be extruded from an extruder die of a blow molding device. A multilayered parison may refer to a multilayered malleable material that has been extruded in preparation for a blow molding process. For example, a multilayered parison may comprise a first layer of a first extruded material, a second layer of a second extruded material, and a third layer of a third extruded material. In some embodiments, multilayered parison may further comprise a fourth layer of a fourth extruded material. Embodiments are contemplated in which multilayered parison may comprise four or more layers, wherein each layer comprises a material, such as the materials described above. In some embodiments, one or more layers may comprise a similar material. For example, a first layer and a third layer of the multilayered parison may comprise a HDPE material. In some embodiments, the multilayered parison may not comprise fluorinated polyethylene.

The multilayered parison may be extruded within an open mold such that the multilayered parison may be extruded without contacting a surface of the mold. The multilayered parison may be extruded a length that is greater than or equal to the length of the mold. For example, the multilayered parison may be extruded such that the multilayered parison extends beyond the distalmost portion of the mold. The extruder die of the blow molding device may extrude the parison out in a hollow cylindrical shape. Embodiments are contemplated in which the parison may be extruded in other suitable hollow shapes that allow for the forming of the multilayered container (e.g., multilayered container 100).

At step 304, the mold may be closed to encase at least a portion of the multilayered parison. For example, the mold may comprise two portions that are separate during step 302 but are moved together during step 304 to enclose at least a portion of the multilayered parison. Further, moving the mold into a closed configuration may encase a portion of the multilayered parison and cut off an excess portion of the multilayered parison. For example, for a mold comprising two portions, moving together each portion of the mold may cause a pinch point configured to remove an excess portion of the multilayered parison at the pinch point. The mold may comprise a shape similar to those depicted in FIGS. 1A-1C. For example, the mold may comprise an hourglass shape, a cylindrical shape, or a rectangular prism shape. In some embodiments, the mold may comprise any combination of curves, ridges, grooves, and/or threads configured to form one or more features of the multilayered container. For example, the mold may comprise one or more curves configured to form a handle (e.g., handle 110) of the multilayered container.

At step 306, air is blown into the multilayered parison such that the multilayered parison takes the shape of the mold to form a multilayered container, such as multilayered container 100. The shape of the mold may form a multilayered container 100 with ridges and/or grooves on one or more walls 108 of storage region 102. Further, the shape of the mold may form threads on neck 104 of the multilayered container 100 such that neck 104 has threads compatible with lid 106. In some embodiments, step 306 further comprises cooling the multilayered container such that the materials are no longer viscous enough to flow.

At step 308, the multilayered container (e.g., multilayered container 100) is removed from the mold. In some embodiments, step 308 further comprises removing or trimming excess material from the multilayered container. For example, excess material may be trimmed from a top portion and/or a bottom portion (with respect to the orientation depicted in FIGS. 1A-1C) such that the molded container is in a desired shape. In some embodiments, forming the multilayered parison to the shape of the mold may create a thin portion (e.g., a portion with a thickness less than 10 mm) designed to be removed or trimmed away after forming the multilayered container.

In some embodiments, excess material may be removed to smooth the outer surface of the multilayered container and/or form or define one or more features of the multilayered container. For example, excess material may be removed to form a handle (e.g. handle 110) or define a neck (e.g., neck 104) of the multilayered container. Further, for example, the shape of the mold may include a handle shape such that a portion of the molded container has a thin portion (e.g., a portion with a thickness of less than 10 mm) that is designed to be cut away to form a handle. In some embodiments, lid 106 may be manufactured separately from the multilayered container 100. For example, lid 106 may be manufactured using a separate process or similar blow molding technique as described herein. Embodiments are contemplated in which any of extrusion blow molding, compression blow molding, injection blow molding, or injection stretch blow molding may be used to form multilayered container 100.

### EXAMPLES

The examples described below were performed using the procedures described in 49 CFR Appendix B to Part 173 - "Procedure for Testing Chemical Compatibility and Rate of Permeation in Plastic Packaging and Receptacles." Specifically, the below examples were performed using an incubation period of 180 days at a temperature no lower than 18°C. The below examples were tested using 3 bottles each having a select chemical placed within the bottle to test the rate of permeation over an incubation period of 180 days at room temperature (RT). For each example, the bottles were placed with the closures downwards for the first and last 24 hours of the incubation period. After the first 24 hours, the bottles were placed in the right-side up orientation. The bottles remained in the right-side up orientation until the last 24 hours of the incubation period in which the bottles were placed with the closures downwards. The weight of each bottle was measured before and after filling the bottles with the select chemical and after the final 24 hours of the incubation period. The permeation rate over the incubation period was then calculated for each bottle. The results of each example are described below.

### Example 1:

For Example 1, each of the three bottles was filled with xylene to test the compatibility of xylene with a bottle having an EVOH layer. The bottles utilized in this example had a first layer comprising non-fluorinated HDPE, a second layer comprising EVOH, and a third layer comprising non-fluorinated HDPE. The second layer comprising EVOH was between the first layer comprising non-fluorinated HDPE and the third layer comprising non-fluorinated HDPE. The experimental results of Example 1 are found below in Table 1. Using the testing method described above, the bottles exhibited an average rate of permeation for xylene of 0.17%. This is well below the failure threshold (a rate of permeation in excess of 2.0% determined over the test period) described in 49 CFR Appendix B to Part 173 - "Procedure for Testing Chemical Compatibility and Rate of Permeation in Plastic Packaging and Receptacles." Therefore, the experimental results for Example 1 indicate that the bottles have an acceptable rate of permeation (a rate of permeation of 2.0% or less determined over the test period) for xylene.

**Table 1: Experimental Results for Xylene**

| Parameter | Bottle 1 | Bottle 2 | Bottle 3 |
|---|---|---|---|
| Initial Bottle Weight (g) | 31.8 | 32.1 | 31.9 |
| Weight of Bottle and Contents (g) | 347.5 | 340.8 | 345.1 |
| Incubation Temperature | RT | RT | RT |
| Final Bottle Weight (g) | 347.0 | 340.2 | 344.6 |
| Final Solution Weight (g) | 315.2 | 308.1 | 312.7 |
| Rate of Permeation | 0.16% | 0.19% | 0.16% |

### Example 2:

For Example 2, each of the three bottles was filled with reagent grade alcohol to test the compatibility of reagent grade alcohol with a bottle having an EVOH layer. The bottles utilized in this example had a first layer comprising non-fluorinated HDPE, a second layer comprising EVOH, and a third layer comprising non-fluorinated HDPE. The second layer comprising EVOH was between the first layer comprising non-fluorinated HDPE and the third layer comprising non-fluorinated HDPE. The experimental results of Example 2 are found below in Table 2. Using the testing method described above, the bottles exhibited an average rate of permeation for reagent grade alcohol of 0.08%. This is well below the failure threshold (a rate of permeation in excess of 2.0% determined over the test period) described in 49 CFR Appendix B to Part 173 - "Procedure for Testing Chemical Compatibility and Rate of Permeation in Plastic Packaging and Receptacles." Therefore, the experimental results for Example 2 indicate that the bottles have an acceptable rate of permeation (a rate of permeation of 2.0% or less determined over the test period) for reagent grade alcohol.

**Table 2: Experimental Results for Reagent Grade Alcohol**

| Parameter | Bottle 1 | Bottle 2 | Bottle 3 |
|---|---|---|---|
| Initial Bottle Weight (g) | 32.3 | 31.4 | 31.9 |
| Weight of Bottle and Contents (g) | 319.0 | 314.2 | 322.4 |
| Incubation Temperature | RT | RT | RT |
| Final Bottle Weight (g) | 318.8 | 314.0 | 322.1 |
| Final Solution Weight (g) | 286.5 | 282.6 | 290.2 |
| Rate of Permeation | 0.07% | 0.07% | 0.10% |

### Example 3:

For Example 3, each of the three bottles was filled with water to test the compatibility of water with a bottle having an EVOH layer. The bottles utilized in this example had a first layer comprising non-fluorinated HDPE, a second layer comprising EVOH, and a third layer comprising non-fluorinated HDPE. The second layer comprising EVOH was between the first layer comprising non-fluorinated HDPE and the third layer comprising non-fluorinated HDPE. The experimental results of Example 3 are found below in Table 3. Using the testing method described above, the bottles exhibited an average rate of permeation for water of 0.13%. This is below the failure threshold (a rate of permeation in excess of 2.0% determined over the test period) described in 49 CFR Appendix B to Part 173 - "Procedure for Testing Chemical Compatibility and Rate of Permeation in Plastic Packaging and Receptacles." Therefore, the experimental results for Example 3 indicate that the bottles have an acceptable rate of permeation (a rate of permeation of 2.0% or less determined over the test period) for water.

**Table 3: Experimental Results for Water**

| Parameter | Bottle 1 | Bottle 2 | Bottle 3 |
|---|---|---|---|
| Initial Bottle Weight (g) | 32.4 | 31.3 | 32.1 |
| Weight of Bottle and Contents (g) | 400.6 | 397.9 | 390.9 |
| Incubation Temperature | RT | RT | RT |
| Final Bottle Weight (g) | 400.0 | 397.5 | 390.5 |
| Final Solution Weight (g) | 367.6 | 366.2 | 358.4 |
| Rate of Permeation | 0.16% | 0.11% | 0.11% |

### Example 4:

For Example 4, each of the three bottles was filled with acetone to test the compatibility of acetone with a bottle having an EVOH layer. The bottles utilized in this example had a first layer comprising non-fluorinated HDPE, a second layer comprising EVOH, and a third layer comprising non-fluorinated HDPE. The second layer comprising EVOH was between the first layer comprising non-fluorinated HDPE and the third layer comprising non-fluorinated HDPE. The experimental results of Example 4 are found below in Table 4. Using the testing method described above, the bottles exhibited an average rate of permeation for acetone of 0.14%. This is well below the failure threshold (a rate of permeation in excess of 2.0% determined over the test period) described in 49 CFR Appendix B to Part 173 - "Procedure for Testing Chemical Compatibility and Rate of Permeation in Plastic Packaging and Receptacles." Therefore, the experimental results for Example 4 indicate that the bottles have an acceptable rate of permeation (a rate of permeation of 2.0% or less determined over the test period) for acetone.

**Table 4: Experimental Results for Acetone**

| Parameter | Bottle 1 | Bottle 2 | Bottle 3 |
|---|---|---|---|
| Initial Bottle Weight (g) | 32.2 | 31.8 | 31.7 |
| Weight of Bottle and Contents (g) | 316.0 | 319.7 | 315.9 |
| Incubation Temperature | RT | RT | RT |
| Final Bottle Weight (g) | 315.6 | 319.4 | 315.4 |
| Final Solution Weight (g) | 283.4 | 287.6 | 283.7 |
| Rate of Permeation | 0.14% | 0.10% | 0.18% |

Features described above as well as those claimed below may be combined in various ways without departing from the scope hereof. The following examples illustrate some possible, non-limiting combinations:
Clause 1. A multilayered container comprising: a storage region configured to contain one or more substances; and one or more walls defining the storage region.
Clause 2. The multilayered container of clause 1, wherein each wall comprises a first layer, a second layer, and a third layer.
Clause 3. The multilayered container of any of clauses 1 through 2, wherein each wall comprises a fourth layer.
Clause 4. The multilayered container of any of clauses 1 through 3, wherein the first layer is configured to provide a liquid barrier to the storage region.
Clause 5. The multilayered container of any of clauses 1 through 4, wherein the second layer is configured to provide a gaseous barrier to the storage region.
Clause 6. The multilayered container of any of clauses 1 through 5, wherein the third layer is configured to provide rigidity to the one or more walls.
Clause 7. The multilayered container of any of clauses 1 through 6, wherein the first layer comprises a high-density polyethylene material.
Clause 8. The multilayered container of any of clauses 1 through 7, wherein the second layer comprises an ethyl vinyl alcohol material.
Clause 9. The multilayered container of any of clauses 1 through 8, wherein the third layer comprises at least one of a high-density polyethylene material or a low-density polyethylene material.
Clause 10. The multilayered container of any of clauses 1 through 9, wherein the fourth layer comprises a nylon material.
Clause 11. The multilayered container of any of clauses 1 through 10, wherein the fourth layer does not comprise an adhesive material.
Clause 12. The multilayered container of any of clauses 1 through 11, wherein the one or more walls do not comprise a fluorinated polyethylene material.
Clause 13. The multilayered container of any of clauses 1 through 12, wherein the first layer is an innermost layer of each wall.
Clause 14. The multilayered container of any of clauses 1 through 13, wherein the third layer is an outermost layer of each wall.
Clause 15. The multilayered container of any of clauses 1 through 14, wherein the second layer is between the first layer and the third layer.
Clause 16. The multilayered container of any of clauses 1 through 15, wherein the fourth layer is between the first layer and the third layer.
Clause 17. The multilayered container of any of clauses 1 through 16, wherein the first layer constitutes 5% to 60% of a thickness of each wall.
Clause 18. The multilayered container of any of clauses 1 through 17, wherein the second layer constitutes 5% to 50% of the thickness of each wall.
Clause 19. The multilayered container of any of clauses 1 through 18, wherein the third layer constitutes 5% to 50% of the thickness of each wall.
Clause 20. The multilayered container of any of clauses 1 through 19, wherein the fourth layer constitutes 5% to 30% of the thickness of the multilayered container.
Clause 21. The multilayered container of any of clauses 1 through 20, wherein the first layer and the third layer prevent degradation of the second layer.
Clause 22. The multilayered container of any of clauses 1 through 21, wherein the one or more substances comprise at least one of a polar solvent or a non-polar solvent.
Clause 23. The multilayered container of any of clauses 1 through 22, wherein the thickness of the multilayered container is up to 10 millimeters.
Clause 24. The multilayered container of any of clauses 1 through 23, wherein the thickness of the one or more walls is up to 10 millimeters.
Clause 25. The multilayered container of any of clauses 1 through 24, wherein the first layer comprises a polyethylene material.
Clause 26. The multilayered container of any of clauses 1 through 25, wherein the third layer comprises a polyethylene material.
Clause 27. The multilayered container of any of clauses 1 through 26, wherein the storage region has a volume within a range of 1 liter to 5.5 liters.
Clause 28. The multilayered container of any of clauses 1 through 27, wherein the one or more substances comprise one or more pathology reagents.
Clause 29. The multilayered container of any of clauses 1 through 28, wherein the one or more substances comprise at least one of aldehydes, hematoxylin, alcohols, xylenes, or oxidizing agents.
Clause 30. The multilayered container of any of clauses 1 through 29, wherein the one or more substances comprise at least one of acetone, methanol, or water.
Clause 31. The multilayered container of any of clauses 1 through 30, wherein the one or more substances comprise at least one of acetic acid, chloroform, or ethyl acetate.
Clause 32. The multilayered container of any of clauses 1 through 31, wherein the one or more substances comprise at least one or alcohols or aromatic compounds.
Clause 33. The multilayered container of any of clauses 1 through 32, wherein the one or more substances comprise at least one of benzene, toluene, ethylbenzene, xylene, acetone, isopropyl alcohol, ethyl alcohol, toluene, methyl alcohol, chloroform, water, reagent grade alcohol, or formaldehyde.
Clause 34. The multilayered container of any of clauses 1 through 33, wherein the fourth layer is configured to provide a gaseous barrier to the storage region.
Clause 35. A method for forming a multilayered container, the method comprising: extruding a multilayered parison; enclosing at least a portion of the multilayered parison with a mold having a shape; blowing air into the multilayered parison such that the multilayered parison forms to the shape of the mold to form the multilayered container; and removing the multilayered container from the mold.
Clause 36. The method of clause 35, wherein the multilayered parison comprises a first layer, a second layer, and a third layer.
Clause 37. The method of any of clauses 35 through 36, wherein the first layer comprises a high-density polyethylene material.
Clause 38. The method of any of clauses 35 through 37, wherein the second layer comprises an ethyl vinyl alcohol material.
Clause 39. The method of any of clauses 35 through 38, wherein the third layer comprises a high-density polyethylene material.
Clause 40. The method of any of clauses 35 through 39, wherein the third layer comprises a low-density polyethylene material.
Clause 41. The method of any of clauses 35 through 40, wherein the multilayered parison comprises a fourth layer.
Clause 42. The method of any of clauses 35 through 41, wherein the fourth layer comprises a nylon material.
Clause 43. The method of any of clauses 35 through 42, wherein the first layer is an innermost layer of the multilayered parison.
Clause 44. The method of any of clauses 35 through 43, wherein the third layer is an outermost layer of the multilayered parison.
Clause 45. The method of any of clauses 35 through 44, wherein the second layer is between the first layer and the third layer.
Clause 46. The method of any of clauses 35 through 45, wherein the fourth layer is between the first layer and the third layer.
Clause 47. The method of any of clauses 35 through 46, further comprising removing an excess material from the multilayered container.
Clause 48. The method of any of clauses 35 through 47, wherein removing the excess material forms a handle of the multilayered container.
Clause 49. The method of any of clauses 35 through 48, wherein the multilayered parison does not comprise a fluorinated polyethylene material.
50. A multilayered container comprising: a storage region configured to contain one or more substances; and one or more walls defining the storage region, each wall comprising: a first layer configured to provide a liquid barrier to the storage region, wherein the first layer comprises a high-density polyethylene material; a second layer configured to provide a gaseous barrier to the storage region, wherein the second layer comprises an ethyl vinyl alcohol material; and a third layer configured to provide rigidity to the one or more walls, wherein the first layer is an innermost layer of each wall, the third layer is an outermost layer of each wall, and the second layer is between the first layer and the third layer, wherein the one or more walls do not comprise a fluorinated polyethylene material.
51. The multilayered container of claim 50, wherein each wall further comprises a fourth layer comprising a nylon material, wherein the fourth layer is between the first layer and the third layer.
52. The multilayered container of claim 50, wherein the first layer constitutes 5% to 60% of a thickness of each wall, wherein the second layer constitutes 5% to 50% of the thickness of each wall, and wherein the third layer constitutes 5% to 50% of the thickness of each wall.
53. The multilayered container of claim 52, wherein each wall further comprises: a fourth layer between the first layer and the third layer, wherein the fourth layer constitutes 5% to 30% of the thickness of the multilayered container.
54. The multilayered container of claim 53, wherein the fourth layer does not comprise an adhesive material.
55. The multilayered container of claim 50, wherein the third layer comprises at least one of a high-density polyethylene material or a low-density polyethylene material.
56. The multilayered container of claim 55, wherein the first layer and the third layer prevent degradation of the second layer.
57. The multilayered container of claim 50, wherein the one or more substances comprise at least one of a polar solvent or a non-polar solvent.
58. A multilayered container comprising: a storage region configured to contain one or more substances; and one or more walls defining the storage region, each wall comprising: a first layer configured to provide a liquid barrier to the storage region; a second layer configured to provide a gaseous barrier to the storage region; and a third layer configured to provide rigidity to the one or more walls, wherein the first layer is an innermost layer of each wall, the third layer is an outermost layer of each wall, and the second layer is between the first layer and the third layer, wherein the one or more walls do not comprise a fluorinated polyethylene material.
59. The multilayered container of claim 58, wherein the first layer constitutes 5% to 60% of a thickness of the multilayered container, wherein the second layer constitutes 5% to 50% of the thickness of the multilayered container, and wherein the third layer constitutes 5% to 50% of the thickness of the multilayered container.
60. The multilayered container of claim 59, further comprising: a fourth layer between the first layer and the third layer, wherein the fourth layer constitutes 5% to 30% of the thickness of the multilayered container.
61. The multilayered container of claim 60, wherein the thickness of the multilayered container is up to 10 millimeters.
62. The multilayered container of claim 58, wherein the first layer and the third layer comprise a polyethylene material.
63. The multilayered container of claim 62, wherein the storage region has a volume within a range of 1 liter to 5.5 liters.
64. The multilayered container of claim 58, wherein the one or more substances comprise one or more pathology reagents.
65. The multilayered container of claim 64, wherein the one or more pathology reagents comprise at least one of aldehydes, hematoxylin, alcohols, xylenes, or oxidizing agents.
66. A method for forming a multilayered container, the method comprising: extruding a multilayered parison comprising: a first layer comprising a high-density polyethylene material; a second layer comprising an ethyl vinyl alcohol material; and a third layer comprising a high-density or low-density polyethylene material, wherein the first layer is an innermost layer of the multilayered parison, the third layer is an outermost layer of the multilayered parison, and the second layer is between the first layer and the third layer, wherein the multilayered parison does not comprise a fluorinated polyethylene material; enclosing at least a portion of the multilayered parison with a mold having a shape; blowing air into the multilayered parison such that the multilayered parison forms to the shape of the mold to form the multilayered container; and removing the multilayered container from the mold.
67. The method of claim 66, further comprising removing an excess material from the multilayered container.
68. The method of claim 67, wherein removing the excess material forms a handle of the multilayered container.
69. The method of claim 66, wherein the multilayered parison further comprises a fourth layer.

Although the present disclosure has been described with reference to the embodiments illustrated in the attached drawing figures, it is noted that equivalents may be employed, and substitutions made herein without departing from the scope of the present disclosure as recited in the claims.

Having thus described various embodiments of the present disclosure, what is claimed as new and desired to be protected by Letters Patent includes the following:

## Claims

1. A multilayered container comprising:
a storage region configured to contain one or more substances; and
one or more walls defining the storage region, each wall comprising:
a first layer configured to provide a liquid barrier to the storage region;
a second layer configured to provide a gaseous barrier to the storage region; and
a third layer configured to provide rigidity to the one or more walls,
wherein the first layer is an innermost layer of each wall, the third layer is an outermost layer of
each wall, and the second layer is between the first layer and the third layer,
wherein the one or more walls do not comprise a fluorinated polyethylene material.

2. The multilayered container of claim 1,
wherein each wall further comprises a fourth layer comprising a nylon material,
wherein the fourth layer is between the first layer and the third layer.

3. The multilayered container of claim 1,
wherein the first layer constitutes 5% to 60% of a thickness of each wall,
wherein the second layer constitutes 5% to 50% of the thickness of each wall, and
wherein the third layer constitutes 5% to 50% of the thickness of each wall.

4. The multilayered container of claim 3, wherein each wall further comprises:
a fourth layer between the first layer and the third layer,
wherein the fourth layer constitutes 5% to 30% of the thickness of the multilayered container.

5. The multilayered container of claim 4, wherein the fourth layer does not comprise an adhesive material.

6. The multilayered container of any preceding claim, wherein the first layer and the third layer comprise a polyethylene material.

7. The multilayered container of claim 6, wherein the first layer and the third layer prevent degradation of the second layer.

8. The multilayered container of any preceding claim, wherein the one or more substances comprise at least one of a polar solvent or a non-polar solvent.

9. The multilayered container of any preceding claim, wherein the first layer comprises a high-density polyethylene material and the second layer comprises an ethyl vinyl alcohol material.

10. The multilayered container of any preceding claim, wherein the one or more substances comprise one or more pathology reagents.

11. The multilayered container of claim 10, wherein the one or more pathology reagents comprise at least one of aldehydes, hematoxylin, alcohols, xylenes, or oxidizing agents.

12. A method for forming a multilayered container, the method comprising:
extruding a multilayered parison comprising:
a first layer comprising a high-density polyethylene material;
a second layer comprising an ethyl vinyl alcohol material; and
a third layer comprising a high-density or low-density polyethylene material,
wherein the first layer is an innermost layer of the multilayered parison, the third layer is an outermost layer of the multilayered parison, and the second layer is between the first layer and the third layer,
wherein the multilayered parison does not comprise a fluorinated polyethylene material;
enclosing at least a portion of the multilayered parison with a mold having a shape;
blowing air into the multilayered parison such that the multilayered parison forms to the shape of the mold to form the multilayered container; and
removing the multilayered container from the mold.

13. The method of claim 12, further comprising removing an excess material from the multilayered container.

14. The method of claim 13, wherein removing the excess material forms a handle of the multilayered container.

15. The method according to any of claims 12 to 14, wherein the multilayered parison further comprises a fourth layer.
